(19) **Europäisches Patentamt**

**European Patent Office**

**Office européen des brevets**

(11) **EP 1 405 175 B1**

(12) **EUROPEAN PATENT SPECIFICATION**

(45) Date of publication and mention
of the grant of the patent:
**27.09.2006 Bulletin 2006/39**

(51) Int Cl.:
**G06F 9/38** (2006.01)

(21) Application number: **02735883.7**

(22) Date of filing: **20.06.2002**

(86) International application number:
**PCT/IB2002/002337**

(87) International publication number:
**WO 2003/005219 (16.01.2003 Gazette 2003/03)**

(54) **MULTIPROCESSOR SYSTEM AND METHOD FOR OPERATING A MULTIPROCESSOR SYSTEM**

MULTIPROZESSORSYSTEM UND VERFAHREN ZUM BETRIEB EINES
MULTIPROZESSORSYSTEMS

SYSTEME MULTIPROCESSEUR ET PROCEDE POUR FAIRE FONCTIONNER UN SYSTEME
MULTIPROCESSEUR

(84) Designated Contracting States:
**AT BE CH CY DE DK ES FI FR GB GR IE IT LI LU
MC NL PT SE TR**

(30) Priority: **29.06.2001 EP 01202517**

(43) Date of publication of application:
**07.04.2004 Bulletin 2004/15**

(73) Proprietor: **Koninklijke Philips Electronics N.V.
5621 BA Eindhoven (NL)**

(72) Inventors:
• **KANG, I-Chih
Inter. Octrooibureau B.V.
NL-5656 AA Eindhoven (NL)**
• **GANGWAL, Om P.
Inter. Octrooibureau B.V.
NL-5656 AA Eindhoven (NL)**
• **NIEUWLAND, Andre K.
Inter. Octrooibureau B.V
NL-5656 AA Eindhoven (NL)**

(74) Representative: **van der Veer, Johannis Leendert
et al
Philips
Intellectual Property & Standards
P.O. Box 220
5600 AE Eindhoven (NL)**

(56) References cited:
**US-A- 4 916 658          US-A- 5 915 128**

• **YOUNG S J: "INTER-PROCESS
COMMUNICATION PRIMITIVES FOR DSM
MULTIPROCESSORS" IMPLEMENTING
FUNCTIONS: MICROPROCESSORS AND
FILMWARE. PARIS, SEPTEMBER 8 - 10 1981,
EUROMICRO SYMPOSIUM ON
MICROPROCESSING AND
MICROPROGRAMMING, AMSTERDAM, NORTH
HOLLAND PUBLISHING CO, NL, vol. SYMP. 7, 8
September 1981 (1981-09-08), pages 327-332,
XP002166142**
• **VAN DER WAL A J ET AL: "Efficient
interprocessor communication in a tightly-
coupled homogeneous multiprocessor system"
DISTRIBUTED COMPUTING SYSTEMS, 1990.
PROCEEDINGS., SECOND IEEE WORKSHOP ON
FUTURE TRENDS OF CAIRO, EGYPT 30 SEPT.-2
OCT. 1990, LOS ALAMITOS, CA, USA,IEEE
COMPUT. SOC, US, 30 September 1990
(1990-09-30), pages 362-368, XP010021448 ISBN:
0-8186-2088-9**

**Description**

The invention relates to a multiprocessor system.

The invention further relates to a method for operating a multiprocessor system.

Signal-processing functions determine the performance requirements for many products based on standards like MPEG-x, DVB, DAB, and LTMTS. This calls for efficient implementations of the signal processing components of these products. However, because of evolving standards and changing market requirements, the implementation requires flexibility and scalability as well. A macropipeline setup is a natural way to model these applications, since streams of data are processed; in this setup the functions (tasks) are the stages and there are buffers between the stages to form the pipeline. This is a way to exploit task-level parallelism (TLP), because all stages can operate in parallel.

A multiprocessor system comprising a plurality of processors is very suitable for implementation of such a macropipeline. A multiprocessor system may comprise several types of processors, such as programmable processors, e.g. RISC-processors or VLIW processors, or dedicated hardware. One processor may execute a particular task, or more than one task in a time-shared fashion. As the complexity of the signal processing functions and their implementation in a multiprocessor system becomes more and more complex, it becomes increasingly more difficult to test and debug such a system.

It is a purpose of the invention to provide a multiprocessor system which can relatively easily be debugged and a method of operating the multiprocessor system which facilitates debugging.

A multiprocessor according to the invention in accordance with this purpose is claimed in claim 1. A method according to the invention in accordance with this purpose is claimed in claim 8.

In a macropipeline implemented on a multiprocessor system data has to be exchanged between the processors, e.g. via a buffer. A synchronization protocol is necessary to synchronize data generation of a first processor with data consumption of a second processor succeeding the first one in the pipeline. Such a synchronization protocol uses synchronization information, e.g. a pair of semaphores. For example, a first semaphore indicates the number of buffer elements available to the first processor for writing new data, and a second semaphore indicates the number of buffer elements available to the second processor to be read. Such a system is disclosed in WO-A-99 22296.

In an implementation which comprises a dedicated processor, the administrating information is preferably stored where it is most essential. For example if the dedicated processor is arranged for writing data to the buffer the first semaphore should be quickly accessible to that processor e.g. in the form of a dedicated register. However, when debugging the system is necessary, or the system has to be tested, e.g. to find bottlenecks in the pipeline it is very difficult to trace this scattered information. According to the invention therefore a copy of at least part of this administrating information is maintained in the shared memory. In this way analysis of the operation of the system is strongly simplified as more relevant information is available in a clustered fashion. And since this information resides in memory, it is accessible by a software debugger.

It is noted that US 6,173,307 B1 discloses a multiprocessor system comprising circular queue shared by multiple producers and multiple consumers. Any producer or consumer can be permitted to preempt any producer or consumer at any time without interfering with the correctness of the queue.

It is further noted that US 4,916,658 describes an apparatus comprising a dynamically controlled buffer. The buffer is suitable for storing data words consisting of several storage locations together with circuitry providing a first indicator that designates the next storage location to be stored into, a second indicator designating the next storage location to be retrieved from, and circuitry that provides the number of locations available for storage and the number of locations available for retrieval.

In a multiprocessor system the processors may carry out more than one task, because the number of tasks can be greater than the number of processors. Also the multiprocessor system may be dynamically reconfigured, e.g. to adapt to a changing bitrate of a data stream processed by the system. In such cases an embodiment of the multiprocessor system according to the invention as claimed in claim 2 is advantageous. When dynamically reconfiguring the system, changing a certain task's communication partner from a hardware task (using distributed info, for example stored in a shell) to a software task (using centralized info in shared memory) can be done much more smoothly because both formats already coexist. For multi-tasking hardware devices, each task has its private copy of the administration information of the buffers it uses stored in the shell (in registers). This increases the size of the shells. This can be avoided by sharing the registers among the tasks. However, each time a task is swapped out, the current state of its buffers must be explicitly saved to memory and each time it is scheduled again, all the state must be restored again. This has a negative impact on the run-time performance. By keeping a centralized copy of the buffer administrative information in memory at all time, saving the buffer state upon task switches is not required because it is already there and up to date.

Claim 3 describes a first implementation of the synchronization protocol. In this embodiment each of the processors maintains a respective synchronization counter. A producing processor (i.e. writing tokens) maintains a first synchronization counter **Np** and a consuming processor (reading this information) maintains a second synchronization counter **Nc**. Provided that the buffer used for exchanging information has a size **Nb**, the number **N1** of tokens available to the first processor is

$$(1) \qquad \mathbf{N1 = Nc\text{-}Np \bmod Nb,}$$

and the number of tokens **N2** available to the second processor is

$$(2) \qquad \mathbf{N2 = Np\text{-}Nc \bmod Nb.}$$

Each time that the producing processor has written a token and releases this to the consuming processor it updates the first synchronization counter **Np** and each time when the consuming processor has read a token and releases it to the producing processor it updates the second synchronization counter **Nc**.

At any time a processor can check the number of tokens which it can use by issuing a first command (claim). This results in a verification whether an amount of buffer space is available to it by comparing both synchronization counters. The first processor uses equation 1 and the second processor uses equation 2 for verification.

The second command (release) results in an increment of the synchronization counter assigned to the processor with the number of released tokens.

The first and the second command may be implemented in the form of a function call in software or by means of dedicated signal in hardware.

A particular embodiment is described in claim 4. In this embodiment the at least one processor can reserve a zone within the buffer which it can arbitrarily use, e.g. for random access or for temporary storage of data.

Instead of maintaining the number of released tokens as in the embodiment of claim 3 it is alternatively possible to maintain the number of available tokens in a counter. In this case the counter for the number of tokens available for writing will be incremented by the consuming processor, and will be decremented by the producing processor. The counter for the number of tokens available for reading will be incremented by the producing processor, and will be decremented by the consuming processor. This embodiment is described in claim 5.

Although the copy in shared memory could be maintained by arbitrary means, it is preferred that the dedicated processor also updates the copy in shared memory. The dedicated processor 'knows' at which moment the changes in the administration information occur.

The buffer is preferably located in shared memory e.g. using the same memory used for the copy of the administrating information.

A shell coupled to a processor facilitates multitasking, in that it may reduce the number of interrupts which has to be handled by the processor itself. This reduces the number of times that an idle processor has to be activated unecessarily, or that a processor has to interrupt an other task which it is processing. In this way the efficiency of the processor is improved.

Several options are possible to implement such a shell for selecting interrupt signals depending on the type of interrupt signals and how they are encoded. In an embodiment the interrupt signals are indicative for a data channel of the processor. A practical way to iplement this is by assigning bits in a register to respective input channels of the processor. For example a 32 bit register could support 32 input channels, wherein for example channel 0 is assigned bit 0, channe 1 is assigned bit 1 of the register etc. When an other processor sents an interrupt signal destinated for channel **k** of the processor the corresponding bit k of the signal register is set. The shell of the receiving processor can select specific interrupt signals by means of a mask register, wherein each bit represents for a particular channel whether the processor wants to ignore the interrupt or not. E.g. if the bit corresponding to channel two is masked, this signal will not cause an interrupt in the processor, and no wake up will happen. In this example, the processor could be busy with processing, in which all bits will be masked, or the processor /task could be waiting for a full/empty token on channel 1, in which case it is not interested on what happens on channel 2.

The signal and the mask register could have an arbitary number of bits depending on the number of channel which should be supported. Alternatively it is possible to support each channel by a number and use a list or look-up table to determine whether the processor should be interrupted for that channel or not. This is however a more complex solution.

Instead of identifying a interrupt signal by its channel number it could be identified by a task number instead. In this embodiment all channels with signals for a specific task set the same bit in the signal register of the shell. In this way, a number of tasks equal to the number of bits in the signal register could be uniquely addressed, whereas each task may have more than one channel. The waiting is a little less specific than with unique channel identification, but the number of unnneccessary wake-ups is still small and more channels can be supported with limited hardware.

Of course, the taks numbers do not have to be identical to the bit numbers, (it is just simple to do it that way) as long as the relation is defined. Furthermore, it also possible that (groups of) tasks share the same signal-interrupt-number.

Instead of identifying the task carried out by the receiver, the senders task identification number could be signalled. In that case the receiving processor can select interrupt signals from a specific task instead of for a specific task. It may depend of the number of external tasks and the number of tasks on the processor personal preference or what seems the most usefull/efficient.

These and other aspects of the invention are described in the drawing. Therein

Figure 1 schematically shows a data processing apparatus
Figure 2 schematically shows a way in which synchronization counters indicate partitions of a buffer,
Figure 3 illustrates a synchronization shell for a processor, and
Figure 4 illustrates a channel controller.

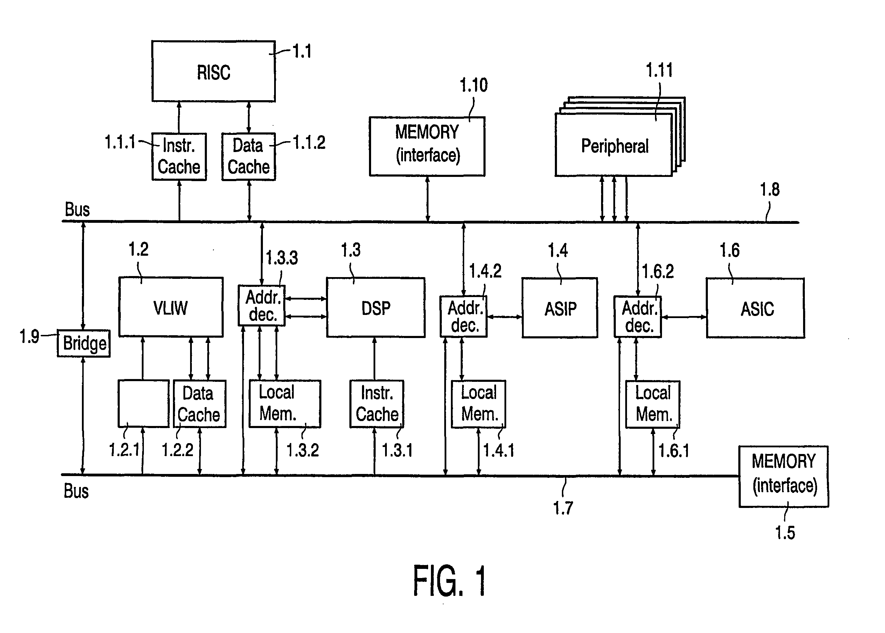

Figure 1 shows a data processing apparatus comprising at least a first 1.6 and a second processing means 1.3. The first processing means, an application specific processor 1.6 is capable of providing data by making tokens available in a buffer means, located in memory 1.5. The tokens are readable by the second processing means 1.3, a digital signal processor, for further processing. The data processing apparatus further comprises a RISC processor 1.1, a VLIW processor 1.2, and an ASIP 1.4. The VLIW processor 1.2, the DSP 1.3, the ASIP 1.4, the memory 1.5 and the ASIC 1.6 are mutually coupled via a first bus 1.7. The RISC processor 1.1 is coupled to a second bus 1.8 which is coupled on its turn to the first bus 1.7 via a bridge 1.9. A further memory 1.10 and peripherals 1.11 are connected to the second bus 1.8. The processors may have auxiliary units. For example the RISC-processor 1.1 comprises an instruction cache 1.1.1 and data cache 1.1.2. Likewise the VLIW processor has an instruction cache 1.2.1 and data cache 1.2.2. The DSP 1.3 comprises an instruction cache 1.3.1, a local memory 1.3.2, and an address decoder 1.3.3. The ASIP 1.4 comprises a local memory 1.4.1 and address decoder 1.4.2. The ASIC 1.6 comprises a local memory 1.6.1 and address decoder 1.6.2. The processing means 1.6, 1.3 are each assigned a respective synchronization indicator. Both synchronization indicators are accessible by both the first 1.6 and the second processing means 1.3. The first synchronization indicator is at least modifiable by the first processing means 1.6 and readable by the second processing means 1.3. The second synchronization indicator is at least modifiable by the second processing means 1.3, and readable by the first processing means 1.6.

Each of the synchronization indicators is represented by a counter. The counter which represents the first synchronization indicator (**writec**) is indicative for a number of tokens being written by the first processing means 1.6. The counter which represents the second synchronization indicator (**readc**) is indicative for a number of tokens being read by the second processing means 1.3.

Several options are possible for the skilled person to indicate the number of tokens by a counter as long as a comparison of the counter values makes it possible to calculate the number of tokens which are available to each of the processors. For example the counter value could be equal to the number of tokens mod n, wherein n is an integer value. Otherwise each step of the counter could represent a fixed number of tokens, or a token could be represented by a number of steps of the counter value.

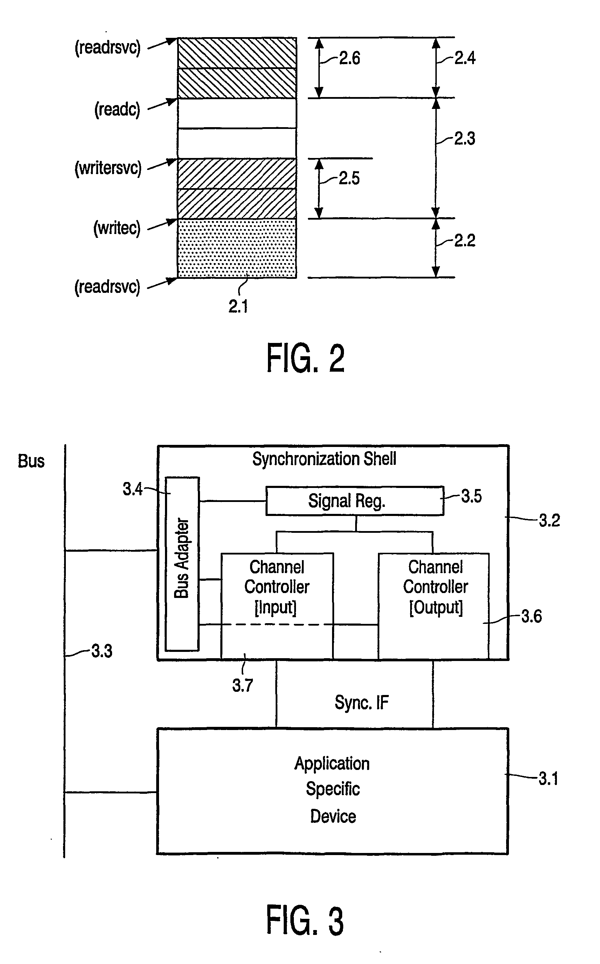

In a practical embodiment the counters are a pointer to the address up to which the buffer means is made available to the other processor. This is schematically illustrated in Figure 2. This Figure schematically shows a buffer space 2.1 within the memory 1.5 which is used by the first processing means 1.2 for providing data to the second processing means 1.3. The buffer space 2.1 is arranged as a cyclical buffer. The buffer space 2.1 comprises a first zone 2.2 and a second zone 2.4 which contains data written by the first processing means 1.2, which is now available to the second processing means 1.3. The buffer space 2.1 further comprises a third zone 2.3 which is available to the first processing means 1.2 to write new data. The producer-counter **writec** indicates the end of the first zone 2.2, and the consumer-counter **readc** points to the end of the second zone 2.3.

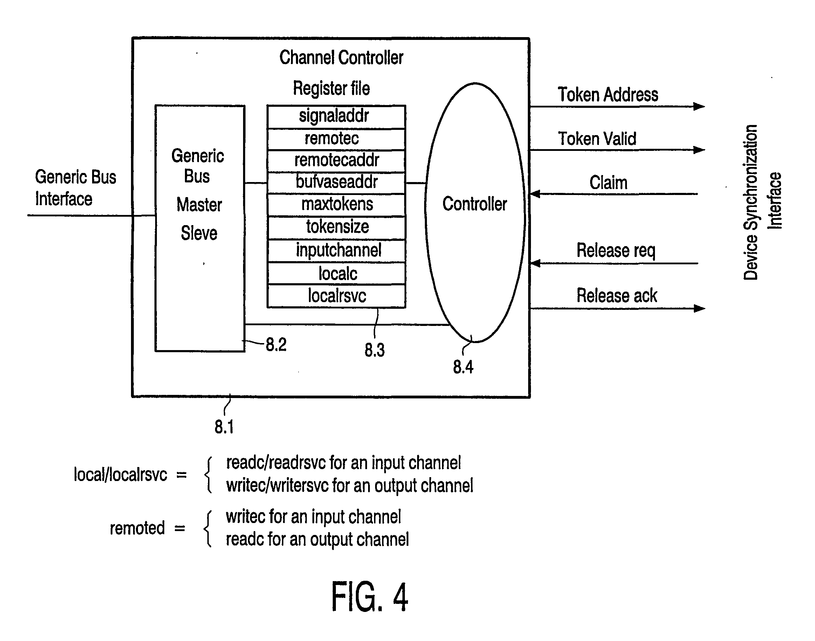

A portion 2.6 within the first zone 2.2 and the second zone 2.4 is reserved by the reservation counter **readrsvc** in combination with the synchronization counter **readc**. A portion 2.5 within the third zone 2.3 is reserved by the reservation counter **writersvc** in combination with the synchronization counter **writec.** As will be illustrated with reference to Figures 3 and 4 the synchronization information comprising the first synchronization counter writec, the second synchronization counter readc, and the reservation counters **readrsvc** and **writersvc** are stored in combination with other information in a channel controller of a synchronization shell coupled to the application specific device 1.6 (indicated in Figure 3 as 3.1).

Referring to Figure 3, the application specific device 3.1 is coupled to the bus 3.3 via a synchronization shell 3.2. In this way the application specific device 3.1 is responsible for the computational tasks, and the synchronization shell performs the communication tasks. For that purpose the synchronization shell 3.2 comprises a bus adapter 3.4, a signal register 3.5 for storing the identity of tasks for which the synchronization shell 3.2 has received a message. The

**EP 1 405 175 B1**

synchronization shell 3.2 further comprises channel controllers 3.6, 3.7. These serve to convert commands of the processor 3.1 in signals to the bus 3.3. Usually an application specific device 3.1 will execute less tasks in parallel than is the case for a programmable processor 3.1.

Figure 4 shows a channel controller 4.1 of the synchronization shell in more detail. The channel controller 4.1 comprises a generic bus master slave unit 4.2, a register file 4.3 and a control unit 4.4.

The bus adapter 3.4 and the generic bus master slave unit 4.2 together couple the channel controller 4.1 to the bus. The bus adapter 3.4 provides an adaptation from a particular interconnection network, e.g. a PI-bus or an AHB-bus to a generic interface. The generic bus master slave unit 4.2 provides for an adaptation of the synchronization signals to said generic interface. In this way it is possible to support different channel controller types and different buses with a relatively low number of different components.

The register file 4.3 stores the synchronization information.

In case the device synchronization interface of a processor 3.1 issues the signal **Claim** in order to claim a number of writable or readable tokens in the buffer, the control unit 4.4 verifies whether this number is available by comparing the locally stored value of the remote counter **remotec** with its reservation counter **localrsvc**. The notation **remotec** signifies **writec** for an input channel and **readc** for an output channel. The notation **localrsvc** refers to **readrsvc** for an input channel and **writersvc** for an output channel.

If the verification is affirmative, the address of a token **Token Address** is returned. Otherwise, the upper boundary address of the buffer space reserved for the processor 3.1 could be returned. The signal **Token Valid** indicates if the claim for tokens was acknowledged, and the processor's synchronization interface can rise the signal **Claim** again. In this way a token address can be provided to the processor at each cycle. If the outcome of the first verification is negative, the channel controller 4.1 reads the remote counter indicated by the address **remotecaddr** and replaces the locally stored value **remotec** by the value stored at that address. The control unit 4.4 now again verifies whether the claimed number of tokens is available.

If the request fails, the channel controller 4.1 could either poll the remote counter regularly in a polling mode or wait for an interrupt by the processor with which it communicates in an interrupt mode. In the mean time it may proceed with another task. The register file in the channel controller comprises the pointer **sgnl_reg_addr** indicating the signal register address of the other device with which the processor is communicating. An interrupting processor may leave in the signal register of a device an indication of the task or of the channel for which the interrupt took place.

The variable **inputchannel** in the register indicates to the channel controller whether the present channel is an input or an output channel and which of these modes is selected for this channel. The variables **maxtoken** and **tokensize** respectively indicate the total number of tokens available in the buffer and the size of the tokens in bytes.

After a successful claim the variable **localrsvc** is updated in conformance with the number of tokens that was claimed.

Instead of the variable **remotec,** the register file could comprise a variable indicating the number of available tokens calculated with the last verification.

In case that the processor 3.1 signals **Release_req** the local counter **localc** is updated in accordance with this request. This local counter **localc** is **readc** for an input channel and **writec** for an output channel. Optionally the signal **Release_req** may be kept high so that the processor 3.1 is allowed to release tokens at any time. However, this signal could be used to prevent flooding the controller when it is hardly able to access the bus.

Alternatively the synchronization process could be implemented in software by using a claim and a release function. By executing the claim function a processor claims a number of tokens for a particular channel and waits until the function returns with the token address. By executing the release function the processor releases a number of tokens for a particular channel. Separate functions could exist for claiming tokens for writing or tokens for reading. Likewise separate functions may be used for releasing.

According to the invention a copy of at least part of the synchronization information is maintained in the shared memory.

The information maintained as a copy may comprise any information which is useful to trace the operation of the dedicated processor, for example a value of the synchronization counter which is maintained by that processor.

By way of example the copy in shared memory could be arranged according to the following datastructure as specified in the C-language:

```
typedef struct
{
    int id;                          //channel identifier
    int maxtokens;                   //maximum number of tokens in channel
    int flags;                       //mode flags (e.g. interrupt/polling)
    CHP_taskT* producer;             //producer task pointer
    CHP_taskT* consumer;             //consumer task pointer
    int tokensize;                   //size of tokens
    char* bufbaseaddr;               //base address of the buffer in memory
    unsigned writec;                 //write counter
    unsigned readc;                  //read counter
    unsigned writersvc;              //write reserve counter
    unsigned readrsvc;               //read reserve counter
    CHP_channel_hwT* pchanregs;
    CHP_channel_hwT* cchanregs;
} CHP_channelT;
```

Apart from the synchronization counter values **writec** and **readc** and the reservation counter values **writersvc** and **readrsvc** this data structure comprises the following data.

**id** is a value identifying the channel, so as to enable a processing scheme including a plurality of channels, for example a first channel for transferring data from a first processing means to a second processing means, a second channel for transferring data from the second processing means to the first processing means and a third channel for transferring data from the second processing means to a third processing means.

The value **maxtokens** indicates the size of the buffer, i.e. as the number of tokens which can be stored in the buffer.

The value **flags** indicates properties of the channel, e.g. if the synchronization is polling or interrupt based, and whether the channel buffers are allocated directly or indirectly. As an alternative it can be decided to give the channel predetermined properties, e.g. restrict the implementation to interrupt based synchronization with directly allocated buffers. In that case the value flags may be omitted.

**producer and consumer** are pointers to the structure describing the task of the first processing means, the producer, and the task of the second processing means, the consumer.

The task structure may contain for example

- an identifier for the task (whose task structure is it)
- a function pointer (if it is a task on the embedded processor; then after booting the root_task can jump to this function and start the application. Void otherwise.
- a device type: to indicate on what type of device the task should be running.

This is useful for the boot process: a task running on a DSP or on an Embedded processor has to be initialized in a different way than a task running on dedicated hardware. By having a major device type, it is easy to select the proper boot procedure.

- a device number: This enable to distinguish between e.g. the first hardware coprocessor from the second. this can be done by giving them a unique number.
- the number of channels

- a list of pointers to channel datastructures.

In this way, when e.g. a UNIX task is started, it can first read its task structure, and then read all the information about all the channels connected to that task. This makes the booting process a lot easier, and avoids that very time some task is added, a control process has to be modified to have all tasks load the proper data structures. The integer **token_ size** indicates the size of the tokens which is exchanged via the channel.

The pointer **bufbaseaddr** refers to the base address of the buffer in memory

The pointers **CHP_channel_hwT* pchanregs** and **CHP_channel_hwT* cchanregs** facilitate access to the registers of a channel controller by software. These are simply pointers to the physical locations of the hardware registers. If any of the fields is 0, then this means that the corresponding task is a software task.

For completeness, we also discuss the case when two hardware tasks are communicating. In this case, **signaladdr** of the producer is set to the address of the signal register in the consumer's synchronization shell, and **remotecaddr** is set to the address of the **localc** register of the consumer channel controller. Another option is to set **remotecaddr** to the readc field in the channel record in shared memory, however this has the disadvantage that the value of the remote counter read may be slightly outdated since the consumer's shell updates the memory a little later after it updates its local register. The setting of the registers for the consumer is just the other way around.

Dynamic reconfiguration entails changing the topology of the task graph representing a certain application. This means for instance that tasks may be stopped and removed, and that certain channels may be reconnected to other tasks. The most interesting scenario in this context is when a certain channel is reconnected on one side (producer or consumer) to another task, and it is of a different implementation. For instance, a producer task (hardware) was connected to a hardware consumer task, and after reconfiguration it has to communicate with a software task. In this case, the software task can use the channel immediately because the channel record is already present and up to date. For the hardware task, several fields in its channel administrative registers have to be changed, namely **signaladdr** is set to the signal controller address of the CPU the new software task is running on.

**remotecaddr** is set to the address of the **readc** field in the channel record. Note that this step is not needed if previously it was already the case even though two hardware tasks were communicating.

To avoid the hardware task from using these registers while they are being updated, it is suspended first and resumed after the updates have been done.

Switching a task's communication partner from a hardware task to another hardware task is also easily done with a channel record in memory. The new task's channel controller registers are simply uploaded from shared memory before being started.

Multiple tasks may be mapped on one single hardware device, e.g. DCT and IDCT. Both tasks may have different input and output channels and therefore need separate channel controllers and registers. Or, we can use the same set of registers in the device shell to implement the channels for both tasks, thereby reducing the silicon area. Without a copy of the administrative information in memory, this requires that when a task is scheduled out, the administrative information of its channels must be explicitly saved in memory, and once it is scheduled again, the administrative information of the corresponding channels can be restored from memory into the registers.

With the proposed approach, a "shadow state" of the channel registers is always present in memory, therefore the task switches on the hardware device are speeded up because no state saving of the channel administrative information is required. Furthermore, the task that is communicating with the task that is scheduled out never notices this task switch because it can still work on the shared memory channel record.

It is remarked that the scope of protection of the invention is not restricted to the embodiments described herein. Neither is the scope of protection of the invention restricted by the reference numerals in the claims. The word 'comprising' does not exclude other parts than those mentioned in a claim. The word 'a(n)' preceding an element does not exclude a plurality of those elements. Means forming part of the invention may both be implemented in the form of dedicated hardware or in the form of a programmed general purpose processor. The invention resides in each new feature or combination of features.

**Claims**

1. Multiprocessor system comprising at least two processors (1.1, 1.2, 1.6) and a memory (1.10) shared by the processors, which shared memory and processors are coupled to an interconnection network (1.8), the processors being arranged for transferring data to each other via a buffer (2.1) in accordance with a synchronization protocol, said system being **characterized in that** said at least two processors comprise at least a dedicated processor (1.6) and a further processor (1.1,1.2) wherein the dedicated processor comprises facilities for administrating information relating to the synchronization protocol, and wherein a copy of at least part of this information is maintained in the shared memory.

**2.** Multiprocessor system according to claim 1, wherein said information comprises at least the following information elements

- an address indicating the location of the buffer,
- an indication for the size of the buffer,
- a synchronization counter (readc, writec) relating to the progress of the data transfer,

and wherein of each of this information elements a copy is maintained in the shared memory.

**3.** Multiprocessor system according to claim 2, wherein the synchronization counter is maintained by the further processor and is readable by the dedicated processor, wherein the dedicated processor maintains a further synchronization counter (readc,writec) which is readable by the further processor, wherein the synchronization protocol comprises

- a first command which when issued by a processor results in a verification whether an amount of buffer space (2.1) is available to it by comparing both synchronization counters,
- a second command which when issued by a processor results in a release of a part of its buffer space by updating the synchronization counter which it maintains.

**4.** Multiprocessor system according to claim 3, wherein at least one of the processors locally maintains a reservation counter (readrsvc, writersvc), wherein
the first command issued by a processor results in a verification whether an amount of buffer space is available to it by comparing its reservation counter with the synchronization counter maintained by the other processor, the reservation counter being updated if the outcome of the verification is affirmative.

**5.** Multiprocessor system according to claim 2, comprising a further counter, both counters being maintained by and readable by both processors, one of the counters being indicative for an amount of buffer space available for said dedicated processor, and the further counter being indicative for said further processor.

**6.** Multiprocessor system according to claim 1, **characterized in that** the dedicated processor also updates the copy in shared memory.

**7.** Multiprocessor system according to claim 1, wherein the buffer is located in shared memory.

**8.** Method for operating a multiprocessor system comprising at least a dedicated processor (1.6) and a further processor (1.1,1.2), and a memory (1.10) shared by the processors, which shared memory and processors are coupled to an interconnection network (1.8), according to which method the processors are arranged for transferring data to each other via a buffer (2.1) in accordance with a synchronization protocol, wherein the dedicated processor comprises administrates information relating to the synchronization protocol, and maintains a copy of at least part of this information in the shared memory.

**Patentansprüche**

**1.** Multiprozessorsystem mit mindestens zwei Prozessoren (1.1, 1.2, 1.6) und einem von den Prozessoren gemeinsam genutzten Speicher (1.10), wobei der gemeinsam genutzte Speicher und die Prozessoren mit einem Verbindungsnetzwerk (1.8) gekoppelt sind,
die Prozessoren dafür eingerichtet sind, über einen Puffer (2.1) gemäß einem Synchronisierungsprotokoll Daten aneinander zu übertragen, wobei das genannte System **dadurch gekennzeichnet ist, dass** die genannten mindestens zwei Prozessoren mindestens einen speziellen Prozessor (1.6) und einen weiteren Prozessor (1.1, 1.2) umfassen, wobei der spezielle Prozessor Einrichtungen zum Verwalten von Informationen bezüglich des Synchronisierungsprotokolls umfasst, und wobei eine Kopie von mindestens einem Teil dieser Informationen in dem gemeinsam genutzten Speicher gehalten wird.

**2.** Multiprozessorsystem nach Anspruch 1, wobei die genannten Informationen mindestens die folgenden Informationselemente umfassen

- eine Adresse, die den Ort des Puffers angibt,

- eine Angabe für die Größe des Puffers,
- einen Synchronisierungszähler (readc, writec), der sich auf den Fortschritt der Datenübertragung bezieht,

und wobei eine Kopie von jedem dieser Informationselemente in dem gemeinsam genutzten Speicher gehalten wird.

3. Multiprozessorsystem nach Anspruch 2, wobei der Synchronisierungszähler durch den weiteren Prozessor geführt wird und von dem speziellen Prozessor gelesen werden kann, wobei der spezielle Prozessor einen weiteren Synchronisierungszähler (readc, writec) führt, der von dem weiteren Prozessor gelesen werden kann, wobei das Synchronisierungsprotokoll Folgendes umfasst:

- einen ersten Befehl, der, wenn er von einem Prozessor ausgegeben wird, eine Überprüfung bewirkt, ob eine Menge an Pufferraum (2.1) für ihn zur Verfügung steht, indem beide Synchronisierungszähler miteinander verglichen werden,
- einen zweiten Befehl, der, wenn er von einem Prozessor ausgegeben wird, eine Freigabe von einem Teil seines Pufferraums bewirkt, indem der Synchronisierungszähler, den er führt, aktualisiert wird.

4. Multiprozessorsystem nach Anspruch 3, wobei mindestens einer der Prozessoren lokal einen Reservierungszähler (readrsvc, writersvc) führt, wobei der erste von einem Prozessor ausgegebene Befehl eine Überprüfung bewirkt, ob eine Menge an Pufferspeicher für ihn zur Verfügung steht, indem sein Reservierungszähler mit dem Synchronisierungszähler verglichen wird, der von dem anderen Prozessor geführt wird, wobei der Reservierungszähler aktualisiert wird, wenn das Ergebnis der Überprüfung bestätigend ist.

5. Multiprozessorsystem nach Anspruch 2, mit einem weiteren Zähler, wobei beide Zähler von beiden Prozessoren geführt werden und von ihnen gelesen werden können, wobei einer der Zähler eine Menge des für den genannten speziellen Prozessor zur Verfügung stehenden Pufferraum angibt und der weitere Zähler den genannten weiteren Prozessor angibt.

6. Multiprozessorsystem nach Anspruch 1, **dadurch gekennzeichnet, dass** der spezielle Prozessor auch die Kopie im gemeinsam genutzten Speicher aktualisiert.

7. Multiprozessorsystem nach Anspruch 1, wobei sich der Puffer im gemeinsam genutzten Speicher befindet.

8. Verfahren zum Betrieb eines Multiprozessorsystem mit mindestens einem speziellen Prozessor (1.6) und einem weiteren Prozessor (1.1, 1.2), und einem von den Prozessoren gemeinsam genutzten Speicher (1.10), wobei der gemeinsam genutzte Speicher und die Prozessoren mit einem Verbindungsnetzwerk (1.8) gekoppelt sind, und wobei gemäß diesem Verfahren die Prozessoren dafür eingerichtet sind, über einen Puffer (2.1) gemäß einem Synchronisierungsprotokoll Daten aneinander zu übertragen, wobei der spezielle Prozessor Einrichtungen zum Verwalten von Informationen bezüglich des Synchronisierungsprotokolls umfasst und eine Kopie von mindestens einem Teil dieser Informationen in dem gemeinsam genutzten Speicher hält.

**Revendications**

1. Système multiprocesseur comprenant au moins deux processeurs (1.1, 1.2, 1.6) et une mémoire (1.10) partagée par les processeurs, lesquels mémoire partagée et processeurs sont couplés à un réseau d'interconnexion (1.8), les processeurs étant aménagés pour transférer des données l'un à l'autre via un tampon (2.1) selon un protocole de synchronisation, ledit système étant **caractérisé en ce que** lesdits au moins deux processeurs comprennent au moins un processeur dédié (1.6) et un processeur additionnel (1.1, 1.2), dans lequel le processeur dédié comprend des fonctions pour administrer des informations relatives au protocole de synchronisation, et dans lequel une copie d'au moins une partie des informations est maintenue dans une mémoire partagée.

2. Système multiprocesseur selon la revendication 1, dans lequel lesdites informations comprennent au moins les éléments d'information suivants

- une adresse indiquant la position d'un tampon,
- une indication de la taille du tampon,
- un compteur de synchronisation (readc, writec) relatif au progrès du transfert de données,

et dans lequel pour chacun de ces éléments d'information, une copie est maintenue dans la mémoire partagée.

3. Système multiprocesseur selon la revendication 2, dans lequel le compteur de synchronisation est maintenu par le processeur additionnel et est lisible par le processeur dédié, dans lequel le processeur dédié maintient un compteur de synchronisation additionnel (readc, writec) qui est lisible par le processeur additionnel, dans lequel le protocole de synchronisation comprend

   - une première commande qui, quand effectuée par un processeur, résulte en la vérification de ce qu'une quantité d'espace tampon (2.1) est disponible pour lui en comparant les deux compteurs de synchronisation,
   - une deuxième commande qui, quand effectuée par un processeur, résulte en une libération d'une partie de son espace tampon en mettant à jour le compteur de synchronisation qu'il maintient.

4. Système multiprocesseur selon revendication 3, dans lequel au moins un des processeurs maintient localement un compteur de réservation (readrsvc, writersvc), dans lequel la première commande effectuée par un processeur résulte en une vérification de ce qu'une quantité de l'espace tampon est disponible pour lui en comparant son compteur de réservation au compteur de synchronisation maintenu par l'autre processeur, le compteur de réservation étant mis à jour si le résultat de la vérification est positif.

5. Système multiprocesseur selon la revendication 2, comprenant un compteur additionnel, les deux compteurs étant maintenus par et lisibles par les deux processeurs, un des compteurs étant indicatif d'une quantité d'espace tampon disponible pour ledit processeur dédié, et le compteur additionnel étant indicatif dudit processeur additionnel.

6. Système multiprocesseur selon la revendication 1, **caractérisé en ce que** le processeur dédié met également à jour la copie en mémoire partagée.

7. Système multiprocesseur selon la revendication 1, dans lequel le tampon est situé en mémoire partagée.

8. Procédé de fonctionnement d'un système multiprocesseur comprenant au moins un processeur dédié (1.6) et un processeur additionnel (1.1, 1.2), et une mémoire (1.10) partagée par les processeurs, lesquels mémoire partagée et processeurs sont couplés à un réseau d'interconnexion (1.8), procédé selon lequel les processeurs sont aménagés pour transférer des données l'un à l'autre via un tampon (2.1) selon un protocole de synchronisation, dans lequel le processeur dédié comprend des informations administratives concernant le protocole de synchronisation, et maintient une copie d'au moins une partie de ces informations dans la mémoire partagée.

FIG. 1

(readrsvc) →

(readc) →

(writersvc) →

(writec) →

(readrsvc) →

2.1

2.6

2.5

2.4

2.3

2.2

# FIG. 2

Bus

Synchronization Shell

3.4

Bus Adapter

Signal Reg.

3.5

3.2

Channel Controller [Input]

Channel Controller [Output]

3.6

3.3

3.7

Sync. IF

Application Specific Device

3.1

# FIG. 3

EP 1 405 175 B1

## Channel Controller

### Register file

Generic Bus
Interface

Generic
Bus

Master

Sleve

| signaladdr |
|---|
| remotec |
| remotecaddr |
| bufvaseaddr |
| maxtokens |
| tokensize |
| inputchannel |
| localc |
| localrsvc |

Controller

8.2

8.3

8.4

8.1

Token Address

Token Valid

Claim

Release req

Release ack

Device Synchronization Interface

$$\text{local/localrsvc} = \begin{cases} \text{readc/readrsvc for an input channel} \\ \text{writec/writersvc for an output channel} \end{cases}$$

$$\text{remoted} = \begin{cases} \text{writec for an input channel} \\ \text{readc for an output channel} \end{cases}$$

## FIG. 4